# EUROPEAN PATENT SPECIFICATION

(11) **EP 3 926 172 B1**
(45) Date of publication and mention of the grant of the patent: **10.04.2024**
(21) Application number: 21176693.6
(22) Date of filing: 28.05.2021
(51) Int. Cl.: F04D 13/06, F04D 29/046, F04D 29/66, F04D 29/047

(54) **MOTOR, PUMP, AND WASHING DEVICE**
MOTOR, PUMPE UND WASCHVORRICHTUNG
MOTEUR, POMPE ET DISPOSITIF DE LAVAGE

(30) Priority: 17.06.2020 CN 202010556763
(43) Date of publication of application: 22.12.2021
(73) Proprietor: BSH Hausgeräte GmbH, 81739 München (DE)
(72) Inventor: Li, Guojie, Nanjing, 210046 (CN); Shi, Yuzhen, Nanjing, 210000 (CN); Wang, Junyang, Nanjing, 210046 (CN)

(56) References cited:
- CN-A- 108 223 393
- DE-A1- 19 912 614
- US-B1- 6 445 098

## Description

### BACKGROUND

### Technical Field

The present invention relates to a motor for a home appliance, a pump, and a washing device.

### Related Art

In an existing motor, a bearing is often positioned by using an additional positioning part, resulting in a relatively complex structure and relatively high component costs and production costs. Consequently, a pump or a washing device, such as a washing machine or a dishwasher, including the motor may be unsatisfactory.

Relevant prior can be found in US 6 445 098 B1, DE 199 12 614 A1 or CN 108 223 393 A.

### SUMMARY

An objective of the present invention is to provide an improved motor, pump, and washing device.

For the foregoing objective, an aspect of embodiments of the present invention relates to a motor for a home appliance, including: a stator; a casing, receiving the stator, and including a support member; a bearing, engaged inside the support member; a rotor shaft, supported by the bearing; and a rotor, adapted to rotate around the rotor shaft relative to the stator.

In this way, the support member of the casing can position and support the bearing, and the bearing can be positioned without using an additional positioning part. Therefore, the motor has a simple structure, and requires low component costs and production costs

The support member includes a base and a positioning wall extending from the base to the rotor and engaged with the bearing.

In this way, the positioning wall of the support member of the casing can position and support the bearing, and the bearing can be positioned without using an additional positioning part. Therefore, the motor has a simple structure, and requires low component costs and production costs

Optionally, the positioning wall includes a reinforcing rib extending radially outward.

In this way, the positioning wall has large radial rigidity and can withstand a relatively strong radial force.

The positioning wall includes a barb engaged with the bearing.

In this way, axial positioning of the bearing can be achieved.

The bearing includes a flange abutting against the barb.

In this way, reliability of the axial positioning of the bearing can be achieved.

The motor includes a cushioning ring sleeved on the bearing, where the positioning wall includes an arc-shaped groove accommodating the cushioning ring.

In this way, vibration between the rotor and the casing can be cushioned, and the bearing, the cushioning ring, and the positioning wall can be positioned.

The bearing includes a sleeve portion engaged with the cushioning ring.

In this way, the bearing and the cushioning ring have reliable engagement.

The cushioning ring is a rubber ring.

In this way, the vibration between the rotor and the casing can be cushioned.

Optionally, the support member includes a gap located between the positioning walls.

In this way, the positioning wall can be at least partially elastically deformed.

Optionally, there are two or more positioning walls.

In this way, the structure of the positioning walls can be designed flexibly.

Optionally, neighboring positioning walls have different structures from each other.

In this way, the neighboring positioning walls can achieve positioning of the bearing in different directions.

Optionally, the bearing is made of a wear-resistant material.

In this way, the bearing has a long service life.

Optionally, the wear-resistant material is plastic.

In this way, the bearing has low costs.

Another aspect of the embodiments of the present invention relates to a pump, including the foregoing motor.

In this way, the support member of the casing can position and support the bearing, and the bearing can be positioned without using an additional positioning part. Therefore, the motor and the pump have simple structures, and require low component costs and production costs.

Still another aspect of the embodiments of the present invention relates to a washing device, including the foregoing pump.

In this way, the support member of the casing can position and support the bearing, and the bearing can be positioned without using an additional positioning part. Therefore, the motor, the pump, and the washing device have simple structures, and require low component costs and production costs.

Yet another aspect of the embodiments of the present invention relates to a washing device, including the foregoing motor.

In this way, the support member of the casing can position and support the bearing, and the bearing can be positioned without using an additional positioning part. Therefore, the motor and the washing device have simple structures, and require low component costs and production costs.

Optionally, the washing device is a dishwasher or a washing machine.

In this way, the support member of the casing can position and support the bearing, and the bearing can be positioned without using an additional positioning part. Therefore, the motor, the pump, and the dishwasher or the washing machine have simple structures, and require low component costs and production costs.

The present invention will be further described below with reference to the accompanying drawings. Same or similar reference numerals are used in the figures to denote same or similar elements in different embodiments, and descriptions of the same or similar elements in different embodiments, as well as descriptions of elements, features, and effects in the related art may also be omitted.

### BRIEF DESCRIPTION OF THE DRAWINGS

FIG. 1 is a schematic partial cross-sectional view of a motor according to an embodiment of the present invention;
FIG. 2 is a schematic partial cross-sectional view of the motor in FIG. 1 from another angle, where a support member is shown in a partially enlarged manner;
FIG. 3 is a schematic perspective view of a bearing of the motor in FIG. 1;
FIG. 4 is a schematic front view of a cushioning ring of the motor in FIG. 1;
FIG. 5 is a schematic partially enlarged cross-sectional view of the motor in FIG. 2;
FIG. 6 is similar to FIG. 2, where a support member engaged with a bearing is shown in a partially enlarged manner; and
FIG. 7 is a schematic partial perspective view of a pump and a washing device that include the motor in FIG. 1.

### DETAILED DESCRIPTION

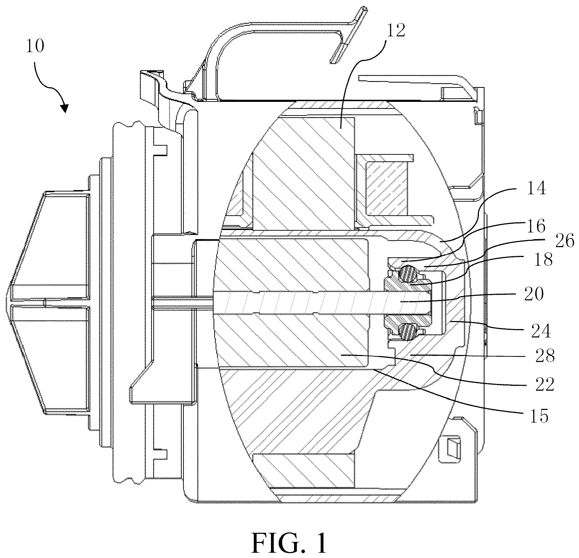

FIG. 1 is a schematic partial cross-sectional view of a motor according to an embodiment of the present invention. As shown in FIG. 1, an aspect of embodiments of the present invention relates to a motor 10, including: a stator 12; a casing 14, receiving the stator 12, and including a support member 16; a bearing 18, engaged inside the support member 16; a rotor shaft 20, supported by the bearing 18; and a rotor 22, adapted to rotate around the rotor shaft 20 relative to the stator 12.

In this way, the support member 16 of the casing 14 can position and support the bearing 18, and the bearing can be positioned without using an additional positioning part. Therefore, the motor 10 has a simple structure, and requires low component costs and production costs.

When the motor 10 is powered on, the rotor 22 rotates relative to the stator 12, to convert electrical energy input into kinetic energy for output. The casing 14 may directly or indirectly support and protect the stator 12, the bearing 18, the rotor shaft 20, and the rotor 22.

The support member 16 includes a base 24 and a positioning wall 26 extending from the base 24 to the rotor 22 and engaged with the bearing 18.

In this way, the positioning wall 26 of the support member 16 of the casing 14 can position and support the bearing 18, and the bearing can be positioned without using an additional positioning part. Therefore, the motor 10 has a simple structure, and requires low component costs and production costs.

The base 24 may be located in the middle of a bottom of the casing 14. The positioning wall 26 may be disposed spaced apart from the rotor 22. The bearing 18 may be disposed spaced apart from the rotor 22 and the base 24, and is located, in an axial direction, between the rotor 22 and the base 24.

Optionally, the positioning wall 26 includes a reinforcing rib 28 extending radially outward.

In this way, the positioning wall 26 has large radial rigidity and can withstand a relatively strong radial force.

The reinforcing rib 28 may be radially outward and be connected to a radial inner wall 15 of the casing 14. In an axial demolding process of injection molding, the reinforcing rib 28 does not need to be radially deformed, thereby achieving good manufacturability of the motor 10.

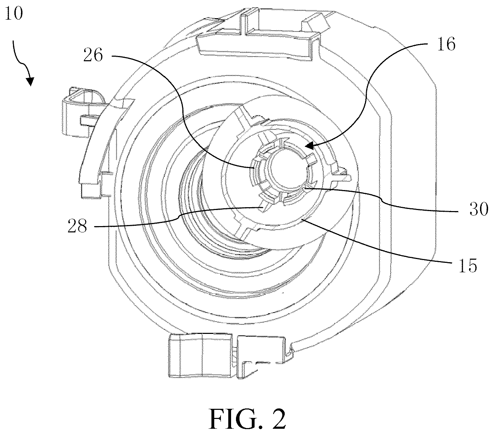

FIG. 2 is a schematic partial cross-sectional view of the motor in FIG. 1 from another angle, where a state in which the support member is not engaged with the bearing is shown in a partially enlarged manner. Referring to FIG. 2, the positioning wall 26 includes a barb 30 engaged with the bearing 18.

In this way, axial positioning of the bearing 18 can be achieved.

The barb 30 may be disposed spaced apart from the radial inner wall 15. The barb 30 may protrude radially inward. In an axial demolding process of injection molding, the barb 30 may be elastically radially deformed toward the radial inner wall 15 to facilitate demolding, thereby achieving good manufacturability.

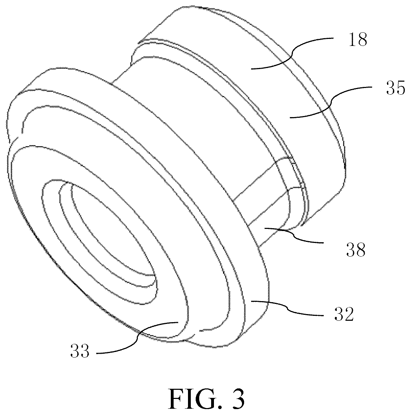

FIG. 3 is a schematic perspective view of a bearing of the motor in FIG. 1. As shown in FIG. 3, the bearing 18 includes a flange 32 abutting against the barb 30

In this way, reliability of the axial positioning of the bearing 18 can be achieved.

The bearing 18 may be substantially cylindrical. The flange 32 may protrude radially outward from an end portion 33 close to the bearing 18.

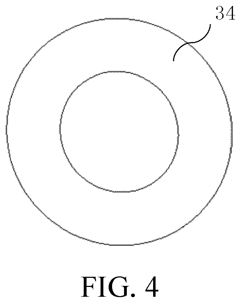

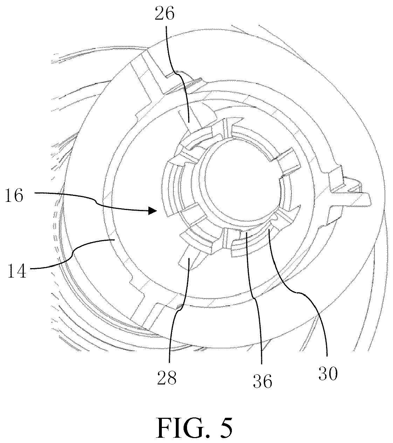

FIG. 4 is a schematic front view of a cushioning ring of the motor in FIG. 1. FIG. 5 is a schematic partially enlarged cross-sectional view of the motor in FIG. 2. Referring to FIG. 4 and FIG. 5, the motor 10 includes a cushioning ring 34 sleeved on the bearing 18, where the positioning wall 26 includes an arc-shaped groove 36 accommodating the cushioning ring 34.

In this way, vibration between the rotor 22 and the casing 14 can be cushioned, and the bearing 18, the cushioning ring 34, and the positioning wall 26 can be positioned.

The arc-shaped groove 36 may be adjacent to the barb 30. Compared with the barb 30, the arc-shaped groove 36 may be closer to the base 24. The barb 30 may be a tail end of the positioning wall 26 away from the base 24.

Also referring to FIG. 3, the bearing 18 includes a sleeve portion 38 engaged with the cushioning ring 34.

In this way, the bearing 18 and the cushioning ring 34 have reliable engagement.

The sleeve portion 38 may be a recessed part between the flange 32 and an other end portion 35 of the bearing 18, so that the cushioning ring 34 can be positioned between the flange 32 and the other end portion 35. After the cushioning ring 34 is sleeved on the bearing 18, the cushioning ring 34 and the bearing 18 are putted together into the support member 16, and are engaged with the positioning wall 26.

The cushioning ring 34 is a rubber ring.

In this way, the vibration between the rotor 22 and the casing 14 can be cushioned.

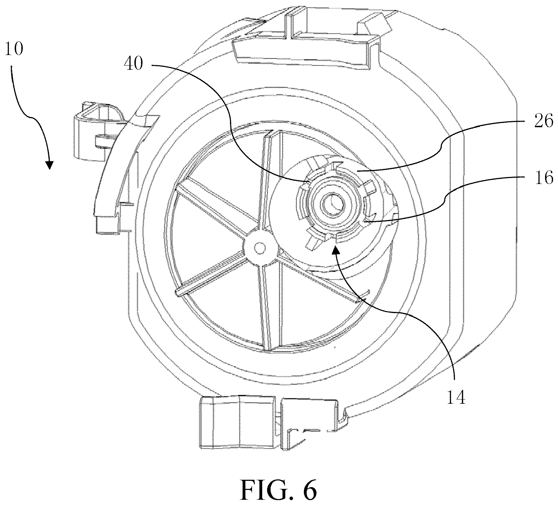

FIG. 6 is similar to FIG. 2, where a state in which a support member is engaged with a bearing is shown in a partially enlarged manner. As shown in FIG. 6, optionally, the support member 16 includes a gap 40 located between the positioning walls 26.

In this way, the positioning wall 26 can be at least partially elastically deformed.

Optionally, there are two or more positioning walls 26.

In this way, the structure of the positioning walls 26 can be designed flexibly.

The gap 40 may separate neighboring positioning walls 26. When one part of the two or more positioning walls 26 is deformed, an other part is not deformed.

Optionally, neighboring positioning walls 26 have different structures from each other.

In this way, the neighboring positioning walls 26 can achieve positioning of the bearing 18 in different directions.

For example, one of two of the neighboring positioning walls 26 may include the reinforcing rib 28, and mainly plays a role of radial positioning, and the other of the two of the neighboring positioning walls 26 may include the arc-shaped groove 36 and the barb 30, and mainly plays a role of axial positioning. The positioning wall 26 mainly playing the role of radial positioning and the positioning wall 26 mainly playing the role of axial positioning are arranged alternately, thereby providing sufficient positioning and support for the bearing 18 axially and radially.

Optionally, the bearing 18 is made of a wear-resistant material.

In this way, the bearing 18 has a long service life.

Optionally, the wear-resistant material is plastic.

In this way, the bearing 18 has low costs.

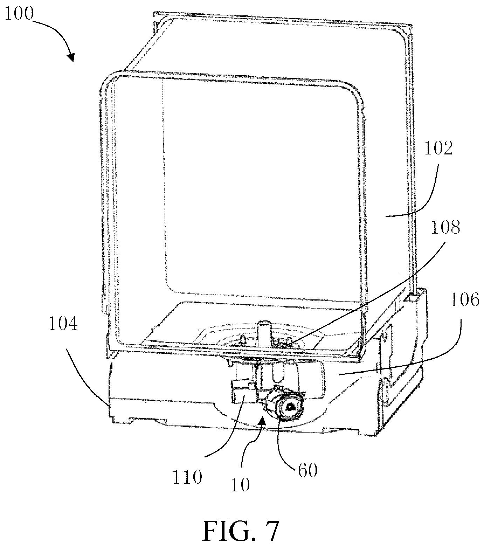

FIG. 7 is a schematic partial perspective view of a pump and a washing device that include the motor in FIG. 1. As shown in FIG. 7, another aspect of the embodiments of the present invention relates to a pump 60, including the foregoing motor 10.

In this way, the support member 16 of the casing 14 can position and support the bearing 18, and the bearing can be positioned without using an additional positioning part. Therefore, the motor 10 and the pump 60 have simple structures, and require low component costs and production costs.

The motor 10 may be a power component of the pump 60. The pump 60 may facilitate transport of fluids such as water.

Still another aspect of the embodiments of the present invention relates to a washing device 100, including the foregoing pump 60.

In this way, the support member 16 of the casing 14 can position and support the bearing 18, and the bearing can be positioned without using an additional positioning part. Therefore, the motor 10, the pump 60, and the washing device 100 have simple structures, and require low component costs and production costs.

The washing device 100 may transmit the fluids by using the pump 60.

Yet another aspect of the embodiments of the present invention relates to a washing device 100, including the foregoing motor 10.

In this way, the support member 16 of the casing 14 can position and support the bearing 18, and the bearing can be positioned without using an additional positioning part. Therefore, the motor 10 and the washing device 100 have simple structures, and require low component costs and production costs.

The motor 10 may be a power component of the washing device 100, and can convert electrical energy input into kinetic energy for output.

Optionally, the washing device 100 is a dishwasher or a washing machine.

In this way, the support member 16 of the casing 14 can position and support the bearing 18, and the bearing can be positioned without using an additional positioning part. Therefore, the motor 10, the pump 60, and the dishwasher or the washing machine have simple structures, and require low component costs and production costs.

Referring to FIG. 7, the washing device 100 may include a cavity 102, a base 104 supporting the cavity 102, and a trough 106 installed in the cavity 102. The cavity 102 may receive an item (not shown in the figure) that needs to be washed.

The pump 60 may be a fluid discharge pump of the washing device 100, be installed in the trough 106, and discharge fluids after washing (not shown in the figure) in the cavity 102 through an inlet 108 of the trough 106 to an outlet 110 of the trough 106, to discharge the fluids out of the washing device 100.

The various specific implementations described above and shown in the accompanying drawings are only used to illustrate the present invention, which is solely defined by the appended claims.

## Claims

1. A motor (10) for a household appliance comprising:
a stator (12);
a casing (14), receiving the stator (12), and comprising a support member (16);
a bearing (18), engaged inside the support member (16);
a rotor shaft (20), supported by the bearing (18);
a rotor (22), adapted to rotate around the rotor shaft (20) relative to the stator (12),
wherein
- the support member (16) comprises a base (24), and at least one positioning wall (26) extending from the base (24) to the rotor (22) and engaged with the bearing (18);
- the at least one positioning wall (26) comprises a barb (30) engaged with the bearing (18), and the bearing (18) comprises a flange (32) abutting against the barb (30),
**characterized in that**
- a cushioning ring (34) is provided, which is a rubber ring and sleeved on the bearing (18),
- the positioning wall (26) comprises an arc-shaped groove (36) accommodating the cushioning ring (34); and
- the bearing (18) comprises a sleeve portion (38) engaged with the cushioning ring (34).

2. The motor (10) according to claim 1, **characterized in that** the positioning wall (26) comprises a reinforcing rib (28) extending radially outward.

3. The motor (10) according to any of the preceding claims, **characterized in that** there are two or more positioning walls (26).

4. The motor (10) according to claim 3, **characterized in that** the support member (16) comprises a gap (40) located between the positioning walls (26).

5. The motor (10) according to claim 3 or claim 4, **characterized in that** neighboring positioning walls (26) have different structures from each other.

6. The motor (1) according to any of the preceding claims, **characterized in that** the bearing (18) is made of a wear-resistant material.

7. The motor (12) according to claim 6, **characterized in that** the wear-resistant material is plastic.

8. A pump (60), **characterized by** comprising the motor (10) according to any one of claims 1 to 7.

9. A home appliance (100) comprising a pump (60) according to claim 8 and/or a motor according to any of claims 1 to 7.

## Patentansprüche

1. Motor (10) für ein Haushaltsgerät, der Folgendes umfasst:
einen Stator (12),
ein Gehäuse (14), in dem der Stator (12) untergebracht ist und das ein Halteelement (16) umfasst,
ein Lager (18), das in das Halteelement (16) eingreift,
eine Rotorwelle (20), die von dem Lager (18) gehalten wird,
einen Rotor (22), der so ausgelegt ist, dass er sich in Bezug auf den Stator (12) um die Rotorwelle (20) dreht,
wobei
- das Halteelement (16) einen Boden (24) und mindestens eine Positionierungswand (26) umfasst, die von dem Boden (24) aus zum Rotor (22) hin verläuft und in das Lager (18) eingreift,
- die mindestens eine Positionierungswand (26) einen Widerhaken (30) umfasst, der in das Lager (18) eingreift, und das Lager (18) einen Flansch (32) umfasst, der an dem Widerhaken (30) anliegt,
**dadurch gekennzeichnet, dass**
- ein Dämpfungsring (34) vorgesehen ist, bei dem es sich um einen Gummiring handelt, der auf das Lager (18) gesteckt ist,
- die Positionierungswand (26) eine bogenförmige Nut (36) umfasst, die den Dämpfungsring (34) aufnimmt, und
- das Lager (18) einen Hülsenabschnitt (38) umfasst, in den der Dämpfungsring (34) eingreift.

2. Motor (10) nach Anspruch 1, **dadurch gekennzeichnet, dass** die Positionierungswand (26) eine Verstärkungsrippe (28) umfasst, die radial nach außen hin verläuft.

3. Motor (10) nach einem der vorhergehenden Ansprüche, **dadurch gekennzeichnet, dass** es zwei oder mehr Positionierungswände (26) gibt.

4. Motor (10) nach Anspruch 3, **dadurch gekennzeichnet, dass** das Halteelement (16) einen Spalt (40) umfasst, der sich zwischen den Positionierungswänden (26) befindet.

5. Motor (10) nach Anspruch 3 oder Anspruch 4, **dadurch gekennzeichnet, dass** benachbarte Positionierungswände (26) unterschiedlich aufgebaut sind.

6. Motor (1) nach einem der vorhergehenden Ansprüche, **dadurch gekennzeichnet, dass** das Lager (18) aus einem verschleißfesten Material hergestellt ist.

7. Motor (12) nach Anspruch 6, **dadurch gekennzeichnet, dass** es sich bei dem verschleißfesten Material um Kunststoff handelt.

8. Pumpe (60), **dadurch gekennzeichnet, dass** sie den Motor (10) nach einem der Ansprüche 1 bis 7 umfasst.

9. Haushaltsgerät (100) mit einer Pumpe (60) nach Anspruch 8 und/oder einem Motor nach einem der Ansprüche 1 bis 7.

## Revendications

1. Moteur (10) pour un appareil ménager comprenant :
un stator (12) ;
un boîtier (14), qui reçoit le stator (12) et comprend un élément de soutien (16) ;
un palier (18), introduit à l'intérieur de l'élément de soutien (16) ;
un arbre de rotor (20), soutenu par le palier (18) ;
un rotor (22), adapté afin de tourner autour de l'arbre de rotor (20) par rapport au stator (12),
dans lequel
- l'élément de soutien (16) comprend une base (24) et au moins une paroi de positionnement (26) s'étendant de la base (24) au rotor (22) et accouplée avec le palier (18)
- l'au moins une paroi de positionnement (26) comprend un ardillon (30) accouplé avec le palier (18) et le palier (18) comprend un flasque (32) prenant appui contre l'ardillon (30),
**caractérisé en ce que**
- une bague d'amortissement (34) est prévue, laquelle est une bague en caoutchouc chemisée sur le palier (18),
- la paroi de positionnement (26) comprend une gorge arquée (36) logeant la bague d'amortissement (34) ; et
- le palier (18) comprend une partie formant manchon (38) accouplée avec la bague d'amortissement (34).

2. Moteur (10) selon la revendication 1, **caractérisé en ce que** la paroi de positionnement (26) comprend une nervure de renforcement (28) s'étendant en direction radiale vers l'extérieur.

3. Moteur (10) selon l'une quelconque des revendications précédentes, **caractérisé en ce que** deux parois de positionnement (26) ou plus sont présentes.

4. Moteur (10) selon la revendication 3, **caractérisé en ce que** l'élément de soutien (16) comprend un vide (40) situé entre les parois de positionnement (26).

5. Moteur (10) selon la revendication 3 ou la revendication 4, **caractérisé en ce que** des parois de positionnement voisines (26) ont des structures qui diffèrent l'une de l'autre.

6. Moteur (1) selon l'une quelconque des revendications précédentes, **caractérisé en ce que** le palier (18) est réalisé en un matériau résistant à l'usure.

7. Moteur (12) selon la revendication 6, **caractérisé en ce que** le matériau résistant à l'usure est le plastique.

8. Pompe (60) **caractérisée en ce qu'**elle comprend le moteur (10) selon l'une quelconque des revendications 1 à 7.

9. Appareil ménager (100) comprenant une pompe (60) selon la revendication 8 et/ou un moteur selon l'une quelconque des revendications 1 à 7.
